**Europäisches Patentamt**

**European Patent Office**

**Office européen des brevets**

(19)

(11) Veröffentlichungsnummer: **0 347 574**

**A2**

# (12) EUROPÄISCHE PATENTANMELDUNG

(21) Anmeldenummer: **89108469.1**

(22) Anmeldetag: **11.05.89**

(51) Int. Cl.⁴: **A61C 13/225**

(30) Priorität: **18.06.88 DE 3820653**
**16.02.89 DE 3904671**

(43) Veröffentlichungstag der Anmeldung:
**27.12.89 Patentblatt 89/52**

(84) Benannte Vertragsstaaten:
**DE ES FR IT SE**

(71) Anmelder: **Brehm, Peter**
**Max-Planck-Strasse 12**
**D-7913 Senden(DE)**

(72) Erfinder: **Brehm, Peter**
**Max-Planck-Strasse 12**
**D-7913 Senden(DE)**
Erfinder: **Schuberth, Ingo**
**Edmund-Jörg-Strasse 38a**
**D-8300 Landshut(DE)**

(74) Vertreter: **Fay, Hermann, Dipl.-Phys. Dr. et al**
**Ensingerstrasse 21 Postfach 1767**
**D-7900 Ulm (Donau)(DE)**

(54) **Verfahren zur Herstellung eines Zahnersatzes aus einem Verankerungsteil und einem daran gehaltenen Zahnersatzteil, sowie Verbinder zur Durchfürhung der Verfahren.**

(57) Das Verfahren dient zur Herstellung eines Zahnersatzes aus einem Verankerungsteil, wie Krone oder dergl., am Restgebiß und einem daran über eine lösbare Verbindungseinrichtung, wie Geschiebe, Riegel, Schraube oder dergl., gehaltenen Zahnersatzteil, wie Prothesengerüst, Modellguß und dergl. Dazu wird auf einem die Kiefersituation darstellenden Arbeitsmodell ein mit exakten Paßflächen für das Verankerungsteil und/oder das Zahnersatzteil vorgefertigter und mit deren Werkstoff keine stoffliche Verbindung eingehender Verbinder positioniert. Dann wird auf dem Arbeitsmodell das Verankerungsteil und/oder das Zahneratzteil aus einer rückstandlos verbrennbaren Modellmasse an den Verbinder anmodelliert. Von diesem Modell wird eine Gußform angefertigt und dabei der Verbinder unmittelbar in der Einbettmasse der Gußform fixiert. Anschließend wird in der Gußform das Gußstück des Verankerungsteils und/oder des Zahnersatzteils auf den Verbinder aufgegossen.

**· Verfahren zur Herstellung eines Zahnersatzes aus einem Verankerungsteil und einem daran gehaltenen Zahnersatzteil, sowie Verbinder zur Durchführung der Verfahren.**

Die Erfindung betrifft Verfahren zur Herstellung eines Zahnersatzes aus einem Verankerungsteil, wie Krone oder dergl., am Restgebiß und einem daran über eine lösbare Verbindungseinrichtung, wie Geschiebe, Riegel, Schraube oder dergl., gehaltenen Zahnersatzteil, wie Prothesengerüst, Modellguß oder dergl., sowie zur Durchführung dieser Verfahren insbesondere geeignete Verbinder.

Verfahren der eingangs genannten Art sind beispielsweise aus der DE 35 40 049 A1 bekannt. Bei ihnen ist die Verbindungseinrichtung ein Geschiebe, von dem zunächst das Patrizenteil und das ihm anhängende Verankerungsteil an einem durch Abdruck im Munde gewonnenen primären Arbeitsmodell als form- und verbrennbares Gußmodell modelliert und mit dessen Hilfe als Primärteil gegossen und fertig bearbeitet wird. Von dem Arbeitsmodell und dem auf ihm befindlichen Primärteil, gegebenenfalls noch mit einem dem Patrizenteil aufgesetzten Platzhalter, wird durch Doublieren ein sekundäres Arbeitsmodell hergestellt, auf dem das Matrizenteil des Geschiebes and das ihm anhängende Zahnersatzteil modelliert und mit Hilfe dieses Gußmodells als Sekundärteil gegossen und fertig bearbeitet wird, worauf das Primärteil und das Sekundärteil entsprechend der Kiefersituation zusammengefügt werden. Diese Arbeitsweise ist sehr aufwendig und leicht mit vielen Ungenauigkeiten behaftet. - Um diese Nachteile zu verringern, sind bereits sogenannte Aufgußverfahren bekannt, bei dem auf das in der beschriebenen Weise hergestellte Primärteil das Sekundärteil nach vorhergehender Modellation unmittelbar aufgegossen wird, ohne daß dabei eine stoffliche Verbindung zwischen dem Primärteil und dem Sekundärteil entsteht, was entweder durch geeignete Werkstoffwahl und/oder eine Oberflächenbehandlung das Primärteils an den beim Aufguß mit dem Sekundärteil in Berührung kommenden Bereichen erreicht werden kann. Dabei besteht das Primärteil aus einer gut bearbeitbaren Goldlegierung, die genaue Schmierpassungen mit dem aufgegossenen Sekundärteil ergibt. Soll aber das Primärteil aus Kostengründen aus Nichtedelmetall(NEM)-Legierungen oder beispielsweise aus Legierungen auf Palladiumbasis bestehen, ergeben sich erhebliche Probleme. Diese Legierungen stellen nämlich wegen ihrer großen Härte den Bearbeiter vor in der üblichen Praxis kaum lösbare Schwierigkeiten. Nicht nur ist die Fertigbearbeitung des Primärteils mit außerordentlich hohem Verschleiß an Fräsern bei unangemessen hohem Zeitaufwand verbunden, sondern auch die Qualität der durch solche Bearbeitung erhaltenen Oberflächen ist unzureichend. Die Oberflächen enthalten durch Fräsrillen gebildete mikrofeine Unterschnitte, die beim Aufgießen des Sekundärteils übernommen werden und die nötige Gleitpassung nicht zulassen, da die bei Gold übliche Schmierpassung nicht mehr möglich ist. Im Ergebnis führt das bekannte Aufgußverfahren zu unzureichenden Ergebnissen, wenn von der Verwendung von vergleichsweise weichen, geschmeidigen Edelmetallegierungen abgesehen werden muß.

Der Erfindung liegt die Aufgabe zugrunde, Verfahren der eingangs genannten Art so auszuführen, daß auch unter üblichen Verarbeitungsbedingungen, also insbesondere in zahntechnischen Labors, mit NEM-Legierungen der erwähnten Härteklassen auf kosten- und zeitsparende Weise ein Zahnersatz mit mindestens ebenso guter Passung zwischen Primärteil und Sekundärteil hergestellt werden kann, wie sie sonst nur mit erheblich teureren, weicheren und geschmeidigeren Edelmetallegierungen erreichbar ist.

Diese Aufgabe wird nach der Erfindung auf zwei Weisen gelöst.

Die erste erfindungsgemäße Lösung ist dadurch gekennzeichnet, daß auf einem die Kiefersituation darstellenden Arbeitsmodell ein mit exakten Paßflächen für das Verankerungsteil vorgefertigter, mit dem Werkstoff des Verankerungsteil keine stoffliche Verbindung eingehender Verbinder positioniert wird, der aus einer dazu geeigneten Legierung, wie CrKoMo-Legierung, besteht oder entsprechend oberflächenhandelt ist, daß auf dem Arbeitsmodell das Verankerungsteil aus einer rückstandlos verbrennbaren Modellmasse an den Verbinder anmodelliert wird, daß von diesem Modell eine Gußform angefertigt und dabei der Verbinder unmittelbar in der Einbettmasse der Gußform fixiert wird, und daß anschließend in der Gußform das Gußstück des Verankerungsteils auf den Verbinder aufgegossen wird.

Die zweite erfindungsgemäße Lösung der Aufgabe ist dadurch gekennzeichnet, daß auf einem die Kiefersituation darstellenden Arbeitsmodell ein zur lösbaren Verbindung mit exakten Paßflächen für das Zahnersatzteil vorgefertigter, mit dem Werkstoff des Zahnersatzteils keine stoffliche Verbindung eingehender Verbinder positioniert wird, der aus einer dazu geeigneten Legierung, wie CrKoMo-Legierung, besteht oder entsprechend oberflächenbehandelt ist, daß auf dem Arbeitsmodell das Zahnersatzteil aus einer rückstandlos verbrennbaren Modellmasse an den Verbinder anmodelliert wird, daß von diesem Modell eine Gußform angefertigt und dabei der Verbinder unmittelbar in der Einbettmasse der Gußform fixiert wird, und daß anschließend in der Gußform das Gußstück des Zahnersatzteils auf den Verbinder aufgegossen wird.

Beide erfindungsgemäße Lösungen unterscheiden sich ersichtlich nur darin, daß sich die lösbare Verbindungseinrichtung im ersten Fall zwischen dem Verbinder und dem Verankerungsteil, im zweiten Fall zwischen dem Verbinder und dem Zahnersatzteil befindet.

Die Erfindung geht von dem Gedanken aus, daß die Verbinder in einer Vielzahl von Ausführungsformen, wie sie zur Verbindung von Sekundär- und Primärteilen bekannt und üblich sind, industrieseitig mit hoher Präzision der Paßflächen vorgefertigt und zur Auswahl für die Weiterverarbeitung zur Verfügung gehalten werden, so daß sich eine Nachbearbeitung des Verbinders im weiterverarbeitenden Betrieb erübrigt. Bei der Weiterverarbeitung wird die Industriepräzision des Verbinders durch den Aufguß des Verankerungsteils bzw. Zahnersatzteils übernommen, wobei der Verbinder in festem Zustand und vom aufgegossenen Gußteil trennbar bleibt. Im Ergebnis wird auf einfache und zeitsparende Weise ein lösbarer Paßsitz höchster Präzision erhalten, wie er sonst allenfalls nur unter Verwendung von Edelmetall-Legierungen erreicht werden kann.

Eine bevorzugte Ausführungsform der erfindungsgemäßen Verfahren ist dadurch gekennzeichnet, daß das Verankerungsteil und das Zahnersatzteil zugleich an den Verbinder anmodelliert werden, daß die Gußform die Modelle des Verankerungsteils und des Zahnersatzteils umfaßt, und daß die Gußstücke des Verankerungsteils und des Zahnersatzteils gleichzeitig in einem einzigen Gießvorgang auf den Verbinder aufgegossen werden.

Die Erfindung betrifft auch einen insbesondere zur Durchführung des ersten erfindungsgemäßen Verfahrens geeigneten Verbinder zwischen einem Verankerungsteil, wie Krone oder dergl., am Restgebiß und einem Zahnersatzteil, wie Prothesengerüst, Modellguß oder dergl., wobei der Verbinder ein Verbindungsorgan aufweist, das zu einer zwischen dem Verbinder und dem Verankerungsteil vorgesehenen lösbaren Verbindungseinrichtung gehört, die als Geschiebe, Riegel, Schraube oder dergl. ausgebeildet ist, wobei das zugeordnete zweite Verbindungsorgan am Verankerungsteil sitzt. Hinsichtlich eines solchen Verbinders besteht die Erfindung darin, daß der Verbinder mit seinem Verbindungsorgan und mit einem Anschluß für das Zahnersatzteil vorgefertigt ist und an seinem Verbindungsorgan fertig ausgebildete Paßflächen zum Formschluß mit dem Verankerungsteil bzw. mit dessen Verbindungsorgan aufweist, wobei der Verbinder aus einer CrKoMo-Legierung oder einer anderen mit dem Werkstoff des Verankerungsteils keine stoffliche Verbindung eingehenden Legierung besteht oder an seiner Oberfläche entsprechend vorbehandelt und mit einer Trennschicht versehen ist. Auf einen solchen Verbinder kann von der einen Seite das Verankerungsteil, von der anderen Seite das Zahnersatzteil aufgegossen werden, ohne daß der Verbinder labormäßig noch irgendeiner Vorbearbeitung bedarf.

Im einzelnen besteht die Möglichkeit, daß am Anschluß für das Zahnersatzteil Retentionen vorgesehen sind, die eine unlösbare formschlüssige Halterung des Verbinders an dem auf den Anschluß aufzugießenden Zahnersatzteil ergeben. Nach einem anderen Vorschlag der Erfindung kann statt der Retentionen auch am Anschluß für das Zahnersatzteil mindestens ein weiteres Verbindungsorgan vorgesehen sein, das mit dem aufzugießenden Zahnersatzteil eine lösbare Verbindungseinrichtung, wie Geschiebe, Konus, Riegel, Schraube oder dergl., ergibt. Verbinder und Zahnersatzteil sind dann voneinander trennbar.

Die Verbindungseinrichtung zwischen dem Verbinder einerseits und dem Verankerungsteil bzw. Zahnersatzteil andererseits kann mehrfach vorgesehen sein.

Weiter bestehen die Möglichkeiten, das am Verbinder befindliche Verbindungsorgan im Fall einer am Verankerungsteil extrakoronalen Anordnung der Verbindungseinrichtung als Matrize und im Fall einer am Verankerungsteil intrakoronalen Anordnung der Verbindungseinrichtung als Patrize ausgebildet ist. Eine in diesem Zusammenhang zweckmäßige Ausbildung ist dadurch gekennzeichnet, daß bei Ausbildung des Verbindungsorgans als Patrize dieses mit dem Anschluß für das Zahnersatzteil durch ein Stegteil verbunden ist, das sich zwischen dem Verbindungsorgan und dem Anschluß im wesentlichen quer zur Einsteckrichtung der Verbindungseinrichtung erstreckt und zur Einsteckrichtung parallele und/oder sich in Einsteckrichtung einander nähernde seitliche Begrenzungsflächen aufweist. Eine andere bevorzugte Ausführungsform ist dadurch gekennzeichnet, daß bei Ausbildung des Verbindungsorgans als Matrize dieses auf der dem Anschluß gegenüber liegenden Seite einen sich gegen das Verankerungsteil erstreckenden Ansatz aufweist, der einen einerseits zum Matrizenhohlraum und andererseits zum Verankerungsteil hin offenen Stegformraum bildet, der zur Einsteckrichtung der Verbindungseinrichtung parallele und/oder sich in Einsteckrichtung einander nähernde seitliche Begrenzungsflächen aufweist. Im letzteren Fall sind zweckmäßigerweise der Stegformraum und der Matrizenhohlraum an dem in Einsteckrichtung rückwärtigen Ende geschlossen.

Soweit der Verbinder einen am Verankerungsteil zur Anlage kommenden Schubverteilungsarm aufweist, sind erfindungsgemäß die fertig ausgebildeten Paßflächen zum Formschluß mit dem Verankerungsteil auch am Schubverteilungsarm vorgesehen. Zweckmäßig ist die Verbindungseinrichtung an der Wurzel und/oder am anderen Ende des Schubverteilungsarms angeordnet und in Bezug auf das Verankerungsteil intrakoronal ausgebildet. Auch besteht die vorteilhafte Möglichkeit, wenigstens eine der Verbindungseinrichtungen zwischen dem Verankerungsteil und dem Verbinder in Bezug auf das Verankerungsteil extrakoronal zwischen dem Schubverteilungsarm und dem Anschluß für das Zahnersatzteil auszubilden. Im übrigen kann wenigstens eine der Verbindungseinrichtungen mit einem Aktivierungsglied, wie Friktionsstift, Schraube oder dergl., ausgestattet sein.

Im einzelnen besteht die Möglichkeit, die Verbindungseinrichtung zwischen dem Verankerungsteil und dem Verbinder als Geschiebe mit parallelen oder konischen Paßflächen an den Verbindungsorganen und am Schubverteilungsarm und mit oder ohne Verblockungsmittel, wie Steck- oder Schwenkriegel, Rasteinrichtung oder dergl., auszubilden. Bei mehreren Verankerungsteilen kann der Verbinder für jedes Verankerungsteil wenigstens eine Verbindungseinrichtung und einen Schubverteilungsarm aufweisen, wobei insbesondere die Schubverteilungsarme aneinander gereiht sein können.

Die Erfindung betrifft schießlich auch einen insbes. zur Durchführung des zweiten erfindungsgemäßen Verfahrens geeigneten Verbinder zwischen einem Verankerungsteil, wie Krone oder dergl., am Restgebiß und einem Zahnersatzteil, wie Prothesengerüst, Modellguß und dergl., wobei der Verbinder ein Verbindungsorgan aufweist, das zu einer zwischen dem Verbinder und dem Zahnersatzteil vorgesehenen lösbaren Verbindungseinrichtung gehört, die als Geschiebe, Riegel, Schraube oder dergl. ausgebildet ist, wobei das zugeordnete zweite Verbindungsorgan am Zahnersatzteil sitzt. Hinsichtlich eines solchen Verbinders besteht die Erfindung darin, daß der Verbinder mit seinem Verbindungsorgan und mit einem Anschluß für das Verankerungsteil vorgefertigt ist und an seinem Verbindungsorgan fertig ausgebildete Paßflächen zum lösbaren Formschluß mit dem Zahnersatzteil bzw. mit dessen Verbindungsorgan aufweist, wobei der Verbinder aus einer CrKoMo-Legierung oder einer anderen mit dem Werkstoff des Zahnersatzteils keine stoffliche Verbindung eingehenden Legierung besteht oder an seiner Oberfläche entsprechend vorbehandelt und mit einer Trennschicht versehen ist. Am Anschluß für das Verankerungsteil sind vorzugsweise Retentionen vorgesehen, die eine unlösbare formschlüssige Halterung des Verbinders an dem auf den Anschluß aufzugießenden Verankerungsteil ergeben. Auch auf einen solchen Verbinder kann von der einen Seite das Verankerungsteil, von der anderen Seite das Zahnersatzteil aufgegossen werden, ohne daß der Verbinder labormäßig noch irgend einer Vorbearbeitung bedarf.

Zweckmäßigerweise ist die Verbindungseinrichtung mit einem Aktivierungsglied, wie Friktionsstift, Schraube oder dergl., ausgestattet. Die Verbindungseinrichtung kann als Geschiebe mit parallelen oder konischen Paßflächen an den Verbindungsorganen und mit oder ohne Verblockungsmittel, wie Steck- oder Schwenkriegel, Rasteinrichtungen oder dergl., ausgebildet sein.

Um die Verbinder auf dem Arbeitsmodell oder in der Einbettmasse der Gußform leicht fixieren zu können, sind die Verbinder vorzugsweise mit Stiften zum Verankern im Arbeitsmodell oder in der Einbettmasse der Gußform versehen. Mit Hilfe solcher Stifte können die Verbinder auch auf einfache Weise parallel am Arbeitsmodell eingesetzt werden. Bei Ausbildung der Verbindungseinrichtung als Geschiebe verlaufen die Stifte vorzugsweise parallel zur Steckrichtung des Geschiebes.

Im folgenden wird die Erfindung anhand von in der Zeichnung dargestellten Ausführungsbeispielen näher erläutert. Die Fig. 1 bis 9 zeigen verschiedene Ausführungsformen von Verbindern, und zwar jeweils in der Teilfigur a) in einer Seitenansicht, in der Teilfigur b) in Draufsicht. Die Fig. 10 zeigt in einer Seitenansicht und in schematischer Darstellung einen weiteren Zahnersatz gemäß dem erfindungsgemäßen Verfahren, und Fig. 11 den dazugehörenden erfindungsgemäßen Verbinder, und zwar in der Teilfig. a) den Verbinder in einer Seitenansicht, in der Teilfig. b) in Draufsicht. Die Fig. 12 zeigt eine nochmals andere Ausführungsform eines erfindungsgemäßen Verbinders, und zwar in der Teilfigur 12a in Seitenansicht, in der Teilfigur 12b in Draufsicht. Schließlich zeigt die Fig. 13 ein weiteres Ausführungsbeispiel eines Verbinders nach der Erfindung in einer Seitenansicht.

In der Zeichnung und in den nachstehenden Erläuterungen sind einander entsprechende Teile mit gleichen Bezugsziffern versehen.

Der Verbinder ist mit 1, ein Verankerungsteil in Form einer Krone mit 2 bezeichnet. Ein über den Verbinder 1 an das Verankerungsteil 2 lösbar anzuschließendes Zahnersatzteil ist nur teilweise mit einem am Verbinder 1 gehaltenen Teilstück 3 dargestellt, wozu der Verbinder 1 einen Anschluß 8 aufweist.

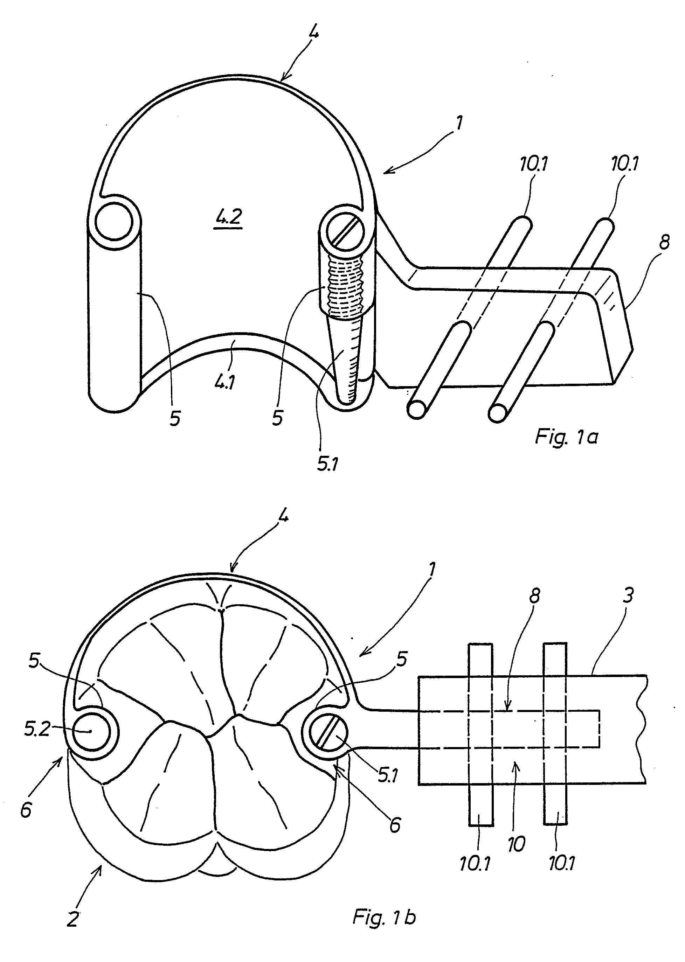

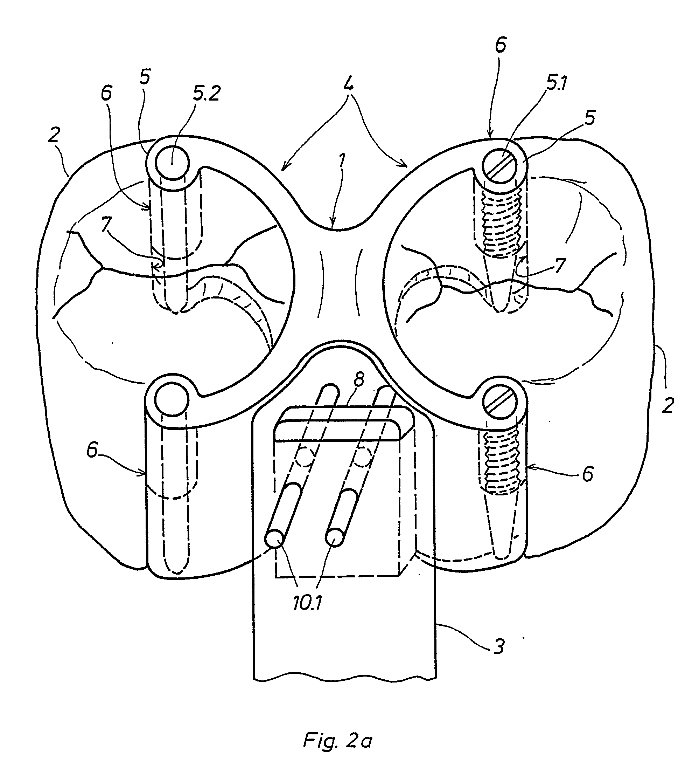

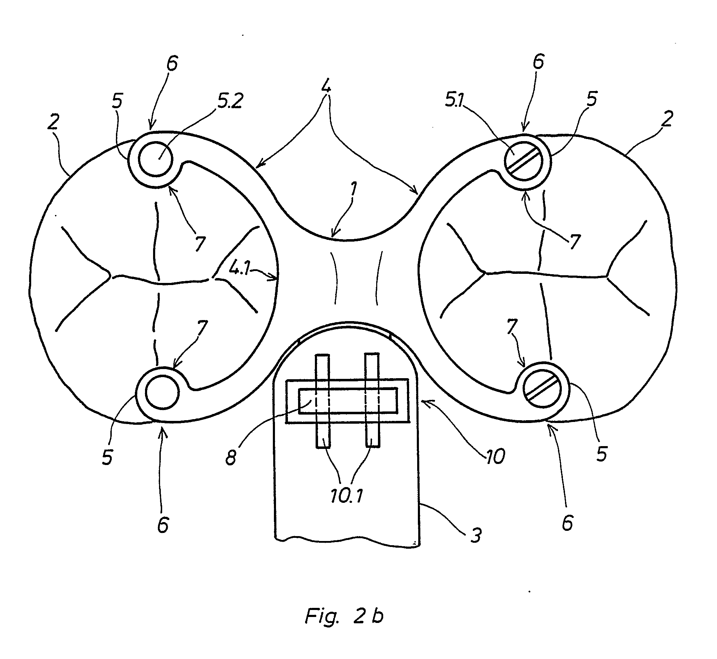

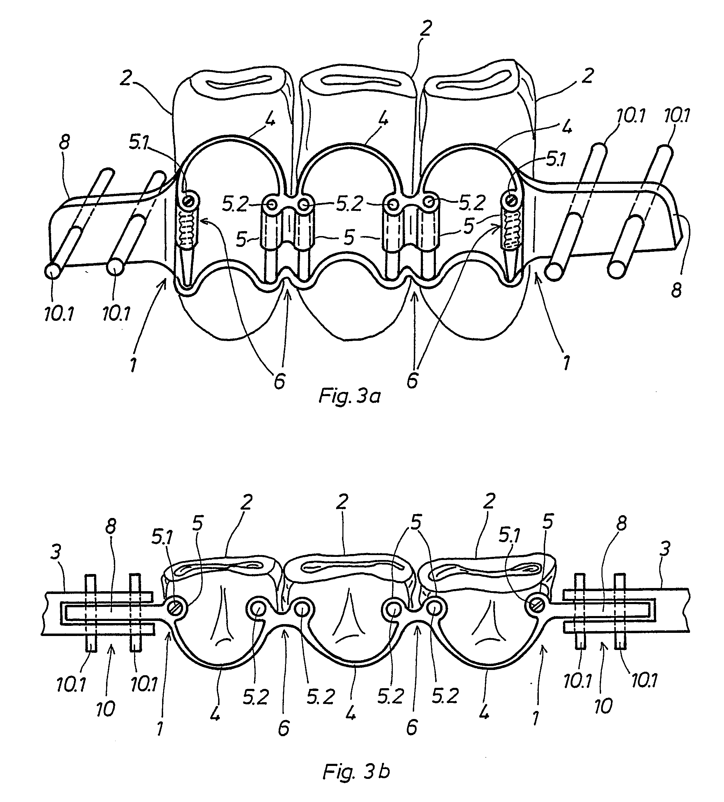

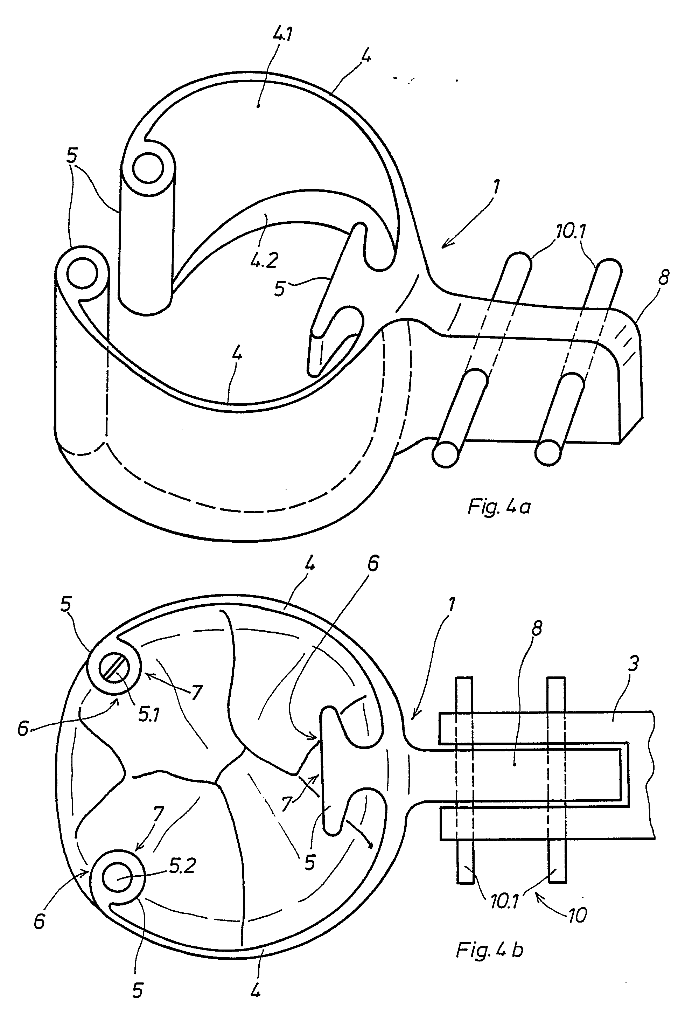

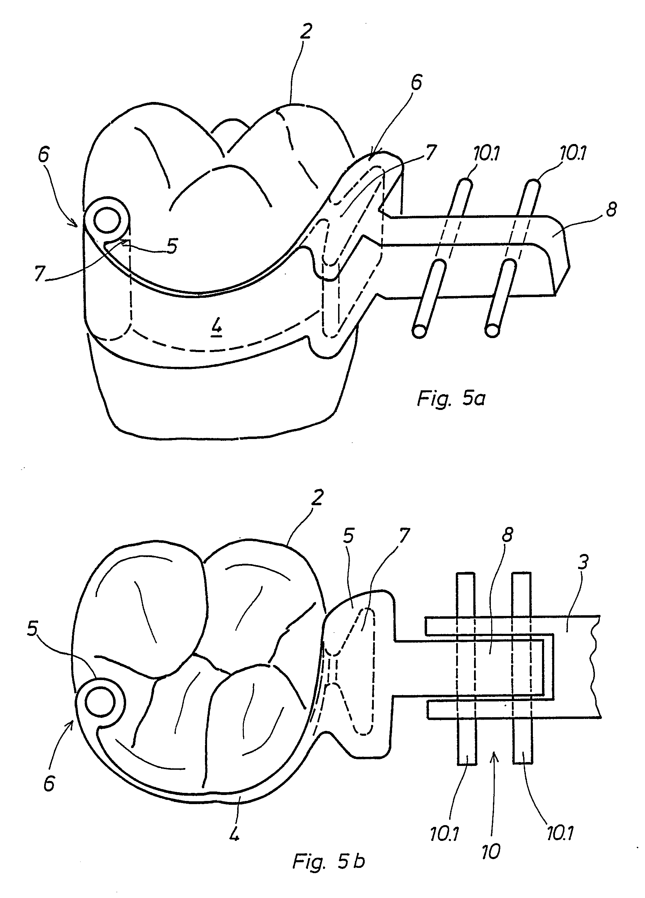

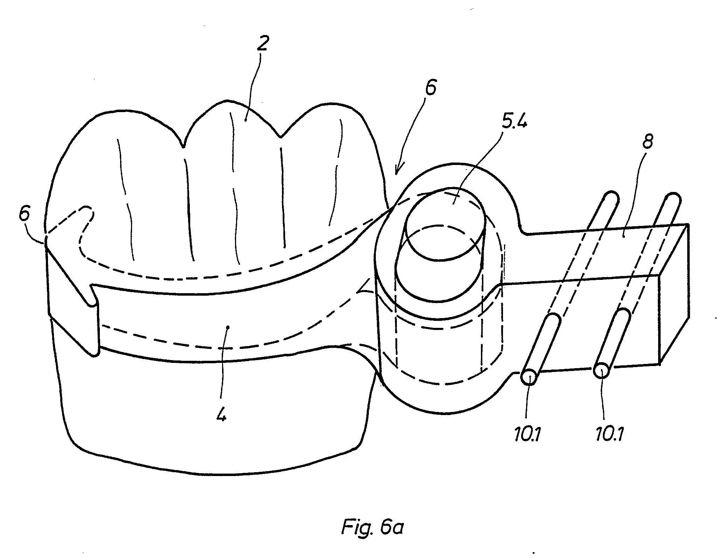

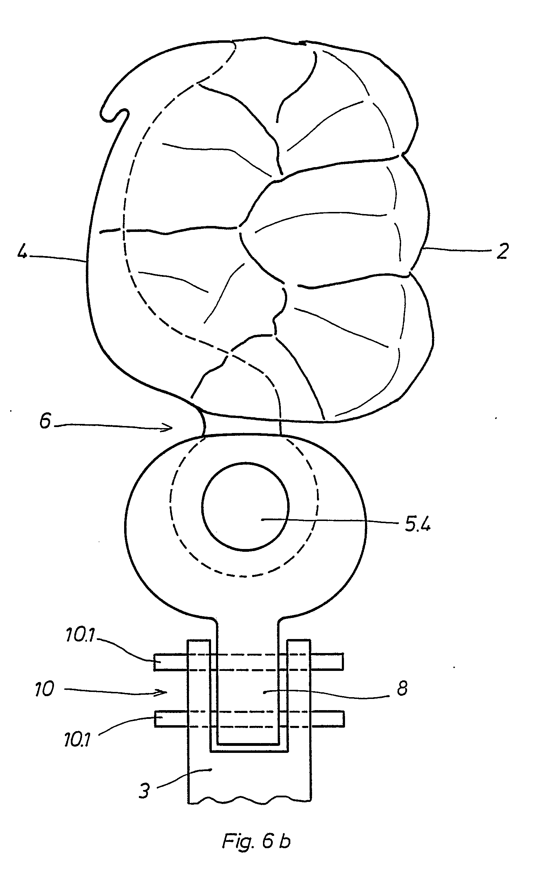

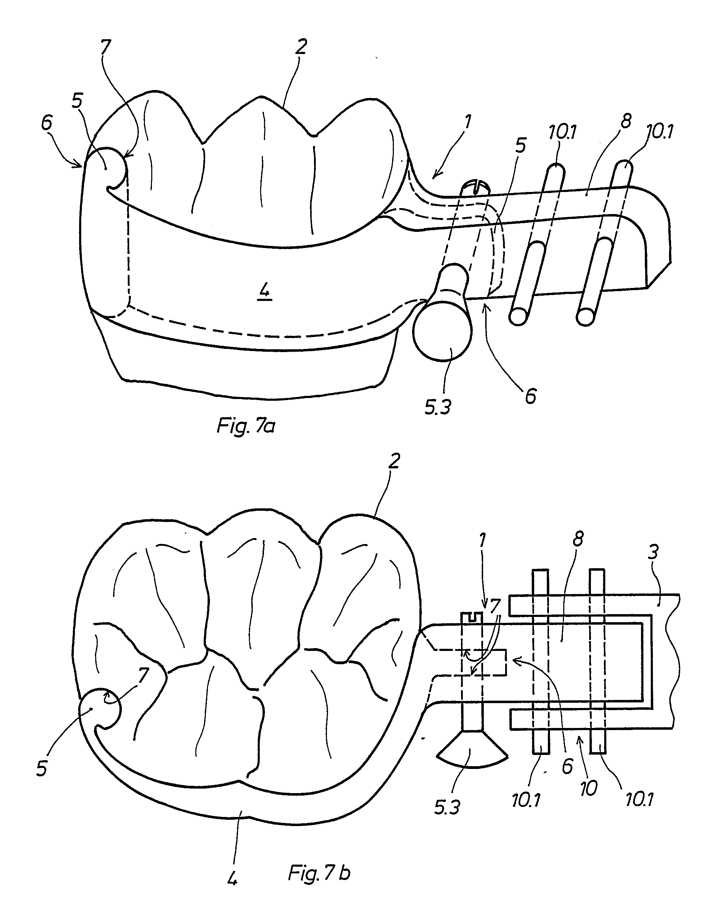

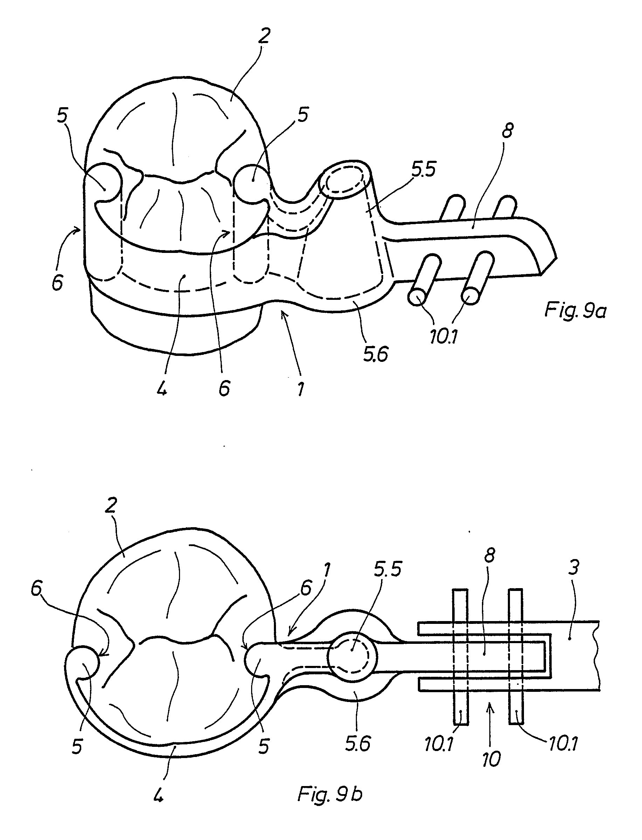

In den Fig. 1 bis 9 besitzt der Verbinder 1 zur Aufhebung horizontaler und vertikaler Schub- und Druckkräfte einen Schubverteilungsarm 4, dessen vertikale Abstützung am Verankerungsteil 2 über eine Stufe oder Schulter erfolgt. Außer dem Schubverteilungsarm 4 trägt der Verbinder 1 ein Verbindungsorgan 5, das zu einer zwischen dem Verankerungsteil 2 und dem Verbinder 1 vorgesehenen lösbaren Verbindungseinrichtung 6 gehört, deren zugeordnetes zweites Verbindungsorgan 7 am Verankerungsteil 2 sitzt. Diese lösbare Verbindungseinrichtung 6 kann mehrfach vorgesehen sein, insbesondere an der Wurzel und am anderen Ende des Schubverteilungsarmes 4, wei in den Fig. 1 bis 3 und 8 bis 9, wo diese Verbindungseinrichtungen gemeinsam ein Rillen-Schulter-Stift-Geschiebe bilden, gegebenenfalls mit einer Aktivierungsschraube 5.1 oder einem Friktionsstift 5.2. Dabei können auch das Geschiebe blockierende Mittel vorgesehen sein, wie ein Steckriegel 5.3 in Fig. 7 . In Fig. 4 ist die in der Wurzel der hier doppelt als Ankerband vorgesehenen Schubverteilungsarme 4 vorhandene Verbindungseinrichtung 6 als intrakoronales T-Geschiebe ausgebildet. Es besteht aber auch die in Fig. 5 gezeigte Möglichkeit, die Verbindungseinrichtung 6, hier als T- oder Konusgeschiebe ausgebildet, zwischen dem Verankerungsteil 2 und dem Verbinder 1 in Bezug auf das Verankerungsteil extrakoronal zwischen dem Schubverteilungsarm 4 und dem Anschluß 8 für das Zahnersatzteil anzuordnen. Ein weiteres Beispiel für eine solche extrakoronale Verbindungseinrichtung 6 zeigt Fig. 9, wo die Verbindungseinrichtung als Geschiebe mit parallelen oder konischen Paßflächen ausgebildet ist, dessen Patrizenteil 5.5 am Verankerungsteil 2 und Matrizenteil 5.6 am Verbinder 1 hängt. Selbstverständlich kann die Anordnung auch umgekehrt getroffen werden: Patrizenteil am Verbinder und Matrizenteil am Verankerungsteil. Die Verbindungseinrichtung 6 kann auch als Schwenkriegel entsprechend Fig. 6 ausgebildet sein, wobei
der Schwenkriegel um den Zapfen 5.4 als Achse schwenkbar ist und in der geschlossenen Riegelstellung den Schubverteilungsarm 4 bildet. Sind mehrere Verankerungsteile 2 vorhanden, kann der Verbinder 1 für jedes Verankerungsteil eigene Verbindungseinrichtungen und eigenem Schubverteilungsarme 4 aufweisen, wie in den Fig. 2 und 3. Die Ausführungsform nach Fig. 3 eignet sich für dicht nebeneinander stehende Verankerungsteile 2, so daß die Schubverteilungsarme 4 entsprechend aneinander gereiht sein können. Das Ausführungsbeispiel nach Fig. 2 ist besonders für einen Lückenschluß oder Lückenfüller zwischen mehr oder weniger eng oder weit benachbarten Verankerungsteilen 2 geeignet.

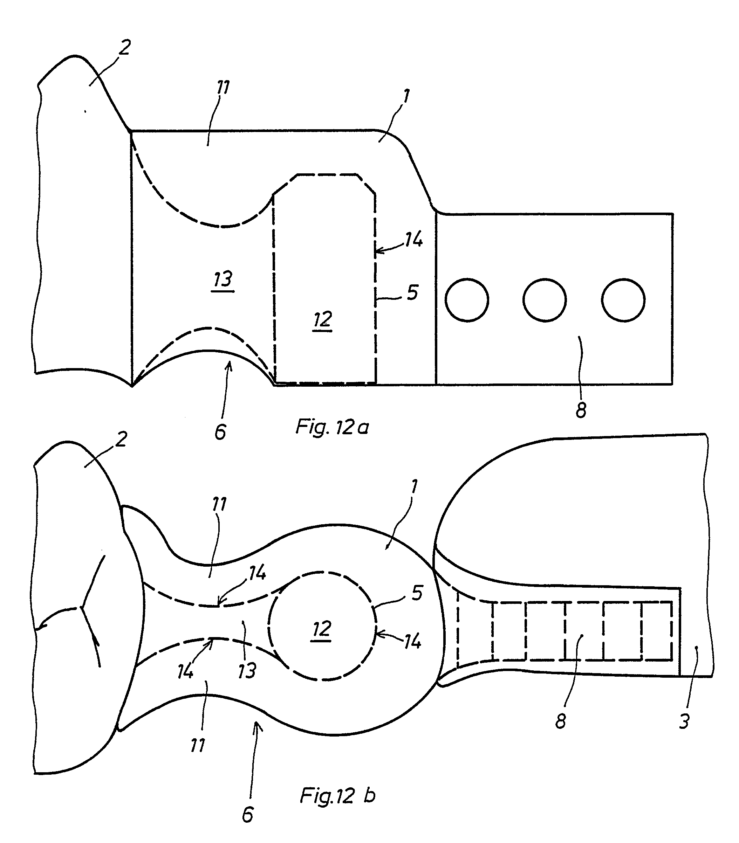

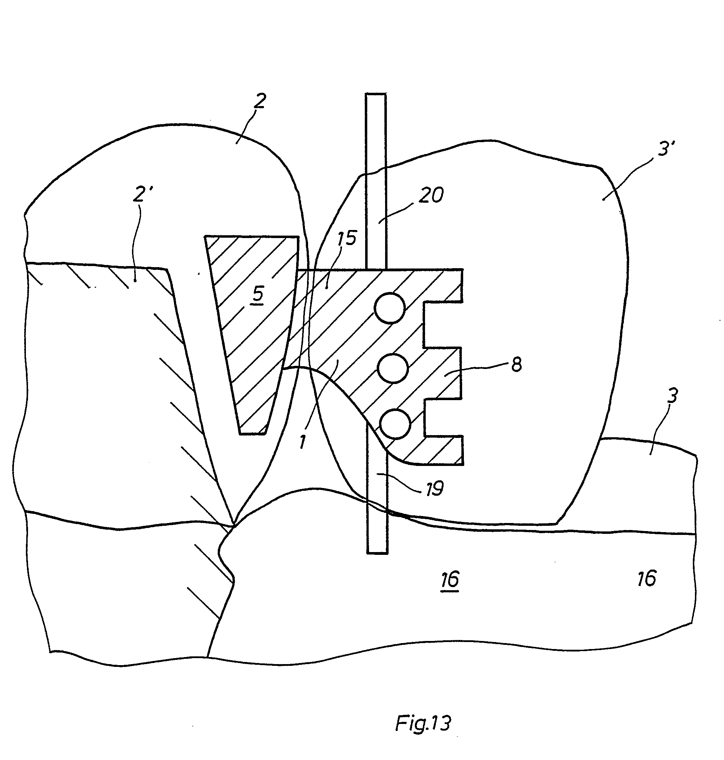

Die Fig. 12 und 13 zeigen Ausführungsbeispiele ohne Schubverteilungsarm. In Fig. 12 ist das Verbindungsorgan 5 extrakoronal als Matrize ausgebildet und auf der dem Anschluß 8 gegenüber liegenden Seite mit einem sich gegen das Verankerungsteil 2 erstreckenden Ansatz 11 versehen, der einen einerseits zum Matrizenhohlraum 12 und andererseits zum Verankerungsteil 2 hin offenen Stegformraum 13 bildet, der zur Einsteckrichtung der Verbindungseinrichtung 6 parallele und/oder sich in Einsteckrichtung einander nähernde seitliche Begrenzungsflächen 14 aufweist. Der Stegformraum 13 und der Matrizenhohlraum 12 sind an dem in Einsteckrichtung rückwärtigen Ende geschlossen. Beim Aufgießen des Verankerungsteils 2 auf den Verbinder 1 bilden sich im Matrizenhohlraum das patrizenförmige Verbindungsorgan und im Steghohlraum 13 ein das patrizenförmige Verbindungsorgan mit dem Verankerungsteil 2 verbindender Steg. - In Fig. 13 ist das Verbindungsorgan 5 intrakoronal als Patrize ausgebildet. Es ist mit dem Anschluß 8 durch ein Stegteil 15 verbunden, das zur Einsteckrichtung parallele und/oder sich in Einsteckrichtung einander nähernde seitliche Begrenzungsflächen aufweist.

Wie im einzelnen diese Verbindungseinrichtungen 6 gemäß den Fig. 1 bis 9 und 12, 13 auch ausgebildet sein mögen, entscheidend in allen Fällen ist, daß der beim Aufgießen des Verankerungsteils 2 mit diesem keine stoffliche Verbindung eingehende Verbinder 1 mit seinen Verbindungsorganen 5, mit dem Schubverteilungsarm 4 und mit dem Anschluß 8 für das Zahnersatzteil 3 industriemäßig mit hoher Genauigkeit und Qualität so vorgefertigt ist, daß die Paßflächen, nämlich die Umlauffräsen 4.1, und die Schulterfräsen 4.2 am Schubverteilungsarm 4 und die Paßflächen an den verbinderseitigen Verbindungsorganen 5 exakt und endgültig ausgebildet sind, also vor dem Einbetten in die Gußform und Aufgießen des Verankerungsteils 2 keiner weiteren Bearbeitung mehr bedürfen. Die Genauigkeit dieser Paßflächen wird dann beim Aufgießen des Verankerungsteils 2 von diesem übernommen und ergibt dann ohne weiteres den gewünschten genauen Paßsitz des Verbinders 1 am Verankerungsteil 2, der ohne weiteres trennbar ist, da sich das Verankerungsteil 2 beim Aufguß nicht mit dem Verbinder 1 stofflich vereinigt, was aufgrund entsprechender Legierungswahl oder einer eine Trennschicht schaffenden Oberflächenbehandlung der Paßflächen am Verbinder erreicht werden kann. Die fertige Ausbildung dieser Paßflächen am Verbinder impliziert, daß die Achsen der dem Schubverteilungsarm 4 zugeordneten Paßflächen und der den Verbindungseinrichtungen zugeordneten Paßflächen an den Verbindungsorganen 5 entsprechend genau parallelisiert sind.

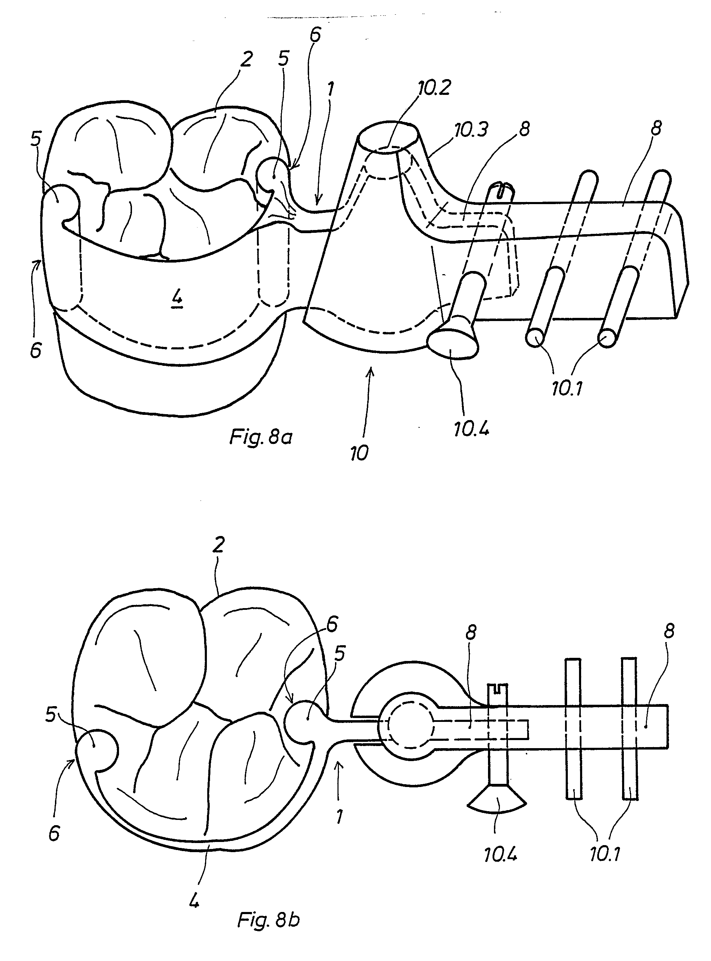

Am Anschluß 8 für das Zahnersatzteil 3 können Retentionen beliebiger Art vorgesehen sein, die eine unlösbare, mechanisch formschlüssige Halterung des Verbinders 1 an dem auf den Anschluß 8 aufzugießenden Zahnersatzteil 3 ergeben. Stattdessen können aber auch am Anschluß 8 weitere Verbindungsorgane vorgesehen sein, die mit dem aufzugießenden Zahnersatzteil 3 eine lösbare Verbindungseinrichtung 10 ergeben, die als Stifte 10.1, Geschiebe mit konischer Patrize 10.2 am Verbinder 1 und konischer Matrize 10.3 am Zahnersatzteil oder umgekehrt (Fig. 8) und/oder als Steckriegel 10.4, Stift oder dergl. ausgebildet sein kann.

Alle in den Figuren 1 bis 9 und 12, 13 dargestellten Ausführungsbeispiele können dadurch hergestellt werden, daß auf dem Arbeitsmodell der oder die entsprechend parallelisierten Verbinder 1 positioniert werden, daß auf dem Arbeitsmodell das Verankerungsteil 2 aus einer rückstandlos verbrennbaren Modellmasse an den Verbinder 1 anmodelliert wird, daß von diesem Modell eine Gußform angefertigt und daß anschließend in der Gußform das Gußstück des Verankerungsteils auf den Verbinder aufgegossen wird. Wichtig ist dabei, daß der Verbinder unmittelbar in der Einbettmasse der Gußform fixiert ist, so daß er während des Gießvorgangs beim Verbrennen der Modellmasse seine Position und Ausrichtung beibehält. Mit dem Verankerungsteil kann auch das Zahnersatzteil an den Verbinder anmodelliert werden, so daß die Gußform die Modelle des Verankerungsteils und des Zahnersatzteils umfaßt. Die Gußstücke des Verankerungsteils und des Zahnersatzteils können dann gleichzeitig in einem einzigen Gießvorgang auf den Verbinder aufgegossen werden.

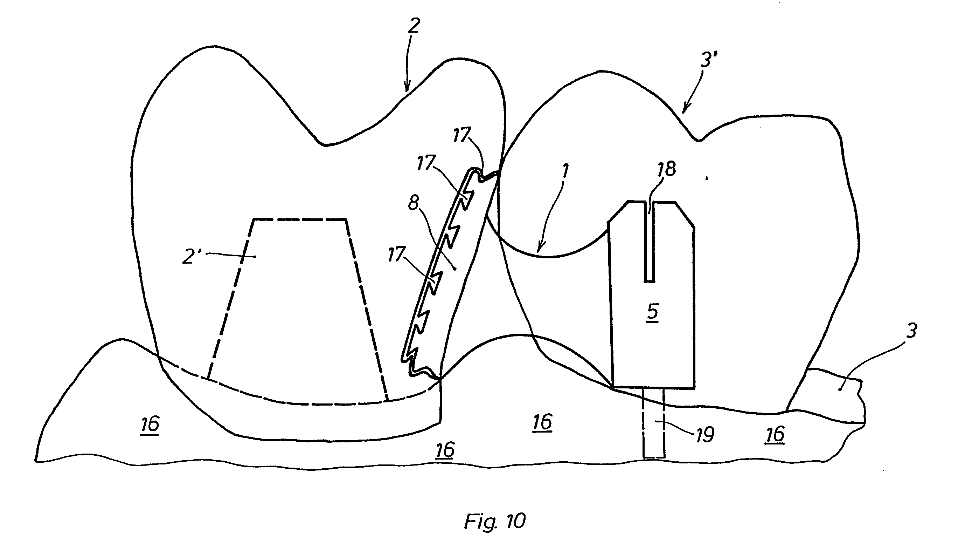

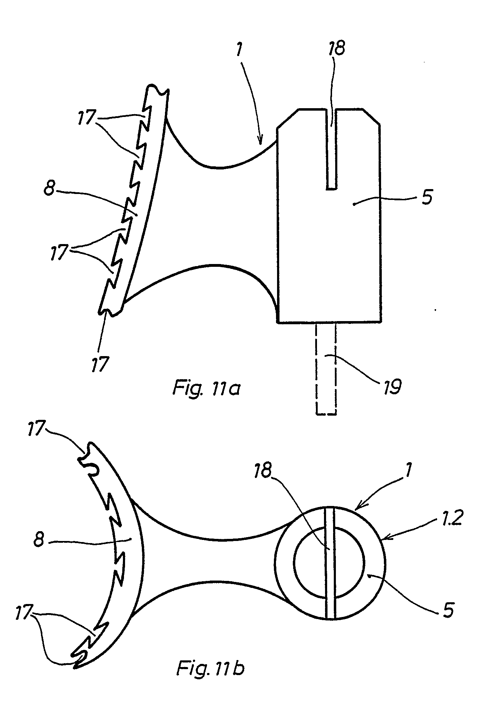

Sinngemäß entsprechendes gilt für das Ausführungsbeispiel nach den Fig. 10 und 11, bei dem der Verbinder 1 unlösbar mit dem Verankerungsteil 2 verbunden ist. Es bildet eine Krone, die auf einem mit 2' bezeichneten Zahnstumpf sitzt. Das Zahnfleisch trägt die Bezugsziffer 16. An das Verankerungsteil 2 ist über den Verbinder das Zahnersatzteil 3 angeschlossen, das beispielsweise als Modellgußplatte ausgebildet sein kann. Auf diesem Zahnersatzteil 3 ist u. a. ein ausgeformtes Zwischenglied 3' ausgebildet, das zusammen mit der Modellgußplatte 3 vom Verankerungsteil 2 abnehmbar ist. Dabei ist der Verbinder 1 mit seinem Anschluß 8 fest und unlösbar im Verankerungsteil 2 gehalten. Der Anschluß 8 ist mit Retentionen 17 ausgebildet, die eine unlösbare formschlüssige Verbindung des Verbinders 1 am Verankerungsteil 2 ergeben. Die Verbindungseinrichtung, durch die der Verbinder 1 mit dem Zahnersatzteil 3 verbunden ist, ist als ein Geschiebe ausgebildet, dessen patrizenförmiges Verbindungsorgan 5 am Verbinder 1 sitzt. Das dieses Verbindungsorgan 5 aufnehmende matrizenförmige Verbindungsorgan der Verbindungseinrichtung ist unmittelbar im Zwischenglied 3' des Zahnersatzteils 3 ausgebildet. Das Patrizenteil 5 kann auch konisch und mit anderem als zylindrischem Profil, beispielsweise T-Profil, ausgebildet sein.

Zur Herstellung des Zahnersatzes wird wiederum auf einen die Kiefersituation darstellenden Arbeitsmodell der Verbinder 1 positioniert. Auf dem Arbeitsmodell mit dem Verbinder wird darauf das Verankerungsteil 2 und das Zahnersatzteil 3 aus einer rückstandlos verbrennbaren Modellmasse, beispielsweise Wachs, an den Verbinder 1 anmodelliert. Von diesem Modell wird eine Gußform angefertigt und dabei der Verbinder 1 unmittelbar in der Einbettmasse der Gußform fixiert. Anschließend werden in der Gußform die Gußstücke des Verankerungsteils 2 und des Zahnersatzteils 3 mit dem Zwischenglied 3' auf den Verbinder nacheinander oder in einem einzigen Gießvorgang aufgegossen.

Damit der Verbinder 1 mit dem Zahnersatzteil 3 beim Aufguß keine unlösbare Verbindung ergibt, besteht auch hier der Verbinder 1 aus einer dazu geeigneten Legierung, insbes. CrKoMo-Legierung, oder er ist entsprechend oberflächenbehandelt und mit einer Trennschicht versehen. In jedem Fall ist der Verbinder 1 mit seinem Verbindungsorgan 5 und mit seinem Anschluß 8 für das Verankerungsteil 2 vorgefertigt, wobei er an seinem Verbindungsorgan 5 fertig ausgebildete exakte Paßflächen 1.2 zum lösbaren Formschluß mit dem Zahnersatzteil 3 bzw. mit dessen das matrizenförmige Verbindungsorgan bildenden Zwischenglied 3' aufweist.

Das patrizenförmige Verbindungsorgan 5 des Verbinders 1 kann als Ativierungsglied ausgebildet sein, wozu es entsprechend Fig. 11 einen Aktivierungsschlitz 18 besitzt, der beim Aufguß des Zahnersatzteils 3 mit einer feuerfesten Masse (Keramik) geschlossen wird. Nach dem Guß und nach Abnehmen des Zahnersatzteils 3 vom Verbinder 1 wird der Schlitz 18 frei gemacht. Ebenso können am Verbinder 1 Retentionselemente für Schrauben, Federn, Riegel oder dergl. vorgesehen sein.

Der Verbinder 1 ist mit einem Stift 19 zum Verankern im Arbeitsmodell und/oder in der Einbettmasse der Gußform versehen. Ein ähnlicher Stift 20 (Fig. 13) kann in der Zeichnung auch nach aufwärts gerichtet vorgesehen sein und parallel zur Steckrichtung des Verbindungsorgans 5 verlaufen, so daß mit diesem Stift 20 der Verbinder 1 auch parallel am Arbeitsmodell eingesetzt werden kann. Die Stifte 19, 20 werden nach dem Guß abgeschliffen.

## Ansprüche

1. Verfahren zur Herstellung eines Zahnersatzes aus einem Verankerungsteil (2), wie Krone oder dergl., am Restgebiß und einem daran über eine lösbare Verbindungseinrichtung (6), wie Geschiebe, Riegel, Schraube oder dergl., gehaltenen Zahnersatzteil (3), wie Prothesengerüst, Modellguß und dergl., dadurch gekennzeichnet, daß auf einem die Kiefersituation darstellenden Arbeitsmodell ein zur lösbaren Verbindung mit exakten Paßflächen für das Verankerungsteil (2) vorgefertigter, mit dem Werkstoff des Verankerungsteils (2) keine stoffliche Verbindung eingehender Verbinder (1) positioniert wird, der aus einer dazu geeigneten Legierung, wie CrKoMo-Legierung, besteht oder entsprechend oberflächenbehandelt ist, daß auf dem Arbeitsmodell das Verankerungsteil (2) aus einer rückstandslos verbrennbaren Modellmasse an den Verbinder (1) anmodelliert wird, daß von diesem Modell eine Gußform angefertigt und dabei der Verbinder (1) unmittelbar in der Einbettmasse der Gußform fixiert wird, und daß anschließend in der Gußform das Gußstück des Verankerungsteils (2) auf den Verbinder (1) aufgegossen wird.

2. Verfahren zur Herstellung eines Zahnersatzes aus einem Verankerungsteil (2), wie Krone oder dergl., am Restgebiß und einem daran über eine lösbare Verbindungseinrichtung, wie Geschiebe, Riegel, Schraube oder dergl., gehaltenen Zahnersatzteil (3), wie Prothesengerüst, Modellguß und dergl., dadurch gekennzeichnet, daß auf einem die Kiefersituation darstellenden Arbeitsmodell ein zur lösbaren Verbindung mit exakten Paßflächen für das Zahnersatzteil (3) vorgefertigter, mit dem Werkstoff des Zahnersatzteils (3) keine stoffliche Verbindung eingehender Verbinder (1) positioniert wird, der aus einer dazu geeigneten Legierung, wie CrKoMo-Legierung, besteht oder entsprechend oberflächenbehandelt ist, daß auf dem Arbeitsmodell das Zahnersatzteil (3) aus einer rückstandlos verbrennbaren Modellmasse an den Verbinder (1) anmodelliert wird, daß von diesem Modell eine Gußform angefertigt und dabei der Verbinder (1) unmittelbar in der Einbettmasse der Gußform fixiert wird, und daß anschließend in der Gußform das Gußstück des Zahnersatzteils (3) auf den Verbinder (1) aufgegossen wird.

3. Verfahren nach Anspruch 1 oder 2, dadurch gekennzeichnet, daß das Verankerungsteil (2) und das Zahnersatzteil (3) zugleich an den Verbinder (1) anmodelliert werden, daß die Gußform die Modelle des Verankerungsteils (2) und des Zahnersatzteils (3) umfaßt, und daß die Gußstücke des Verankerungsteils (2) und des Zahnersatzteils (3) gleichzeitig in einem einzigen Gießvorgang auf den Verbinder (1) aufgegossen werden.

4. Verbinder zwischen einem Verankerungsteil (2), wie Krone oder dergl., am Restgebiß und einem Zahnersatzteil (3), wie Prothesengerüst, Modellguß und dergl., wobei der Verbinder (1) ein Verbindungsorgan (5) aufweist, das zu einer zwischen dem Verbinder und dem Verankerungsteil (2) vorgesehenen lösbaren Verbindungseinrichtung (6) gehört, die als Geschiebe, Riegel, Schraube oder dergl. ausgebildet ist, wobei das zugeordnete zweite Verbindungsorgan (7) am Verankerungsteil (2) sitzt, insbesondere zur Durchführung des Verfahrens nach Anspruch 1 oder 3, dadurch gekennzeichnet, daß der Verbinder (1) mit seinem Verbindungsorgan (5) und mit einem Anschluß (8) für das Zahnersatzteil (3) vorgefertigt ist und an seinem Verbindungsorgan (5) fertig ausgebildete Paßflächen zum Formschluß mit dem Verankerungsteil (2) bzw. mit dessen Verbindungsorgan (7) aufweist, wobei der Verbinder (1) aus einer CrKoMo-Legierung oder einer anderen mit dem Werkstoff des Verankerungsteils (2) keine stoffliche Verbindung eingehenden Legierung besteht oder an seiner Oberfläche entsprechend vorbehandelt und mit einer Trennschicht versehen ist.

5. Verbinder nach Anspruch 4, dadurch gekennzeichnet, daß am Anschluß (8) für das Zahnersatzteil (3) Retentionen vorgesehen sind, die eine unlösbare formschlüssige Halterung des Verbinders (1) an dem auf den Anschluß (8) aufzugießenden Zahnersatzteil (3) ergeben.

6. Verbinder nach Anspruch 4, dadurch gekennzeichnet, daß auch am Anschluß (8) für das Zahnersatzteil (3) mindestens ein weiteres Verbindungsorgan (10) vorgesehen ist, das mit dem aufzugießenden Zahnersatzteil (3) eine lösbare Verbindungseinrichtung, wie Geschiebe (10.2, 10.3), Konus, Riegel (10.4), Schraube oder dergl. ergibt.

7. Verbinder nach einem der Ansprüche 4 bis 6, dadurch gekennzeichnet, daß die Verbindungseinrichtung (6) zwischen dem Verbinder (1) einerseits und dem Verankerungsteil (2) bzw. Zahnersatzteil (3) andererseits mehrfach vorgesehen ist.

8. Verbinder nach einem der Ansprüche 4 bis 7, dadurch gekennzeichnet, daß das am Verbinder befindliche Verbindungsorgan (5) im Fall einer am Verankerungsteil (2) extrakoronalen Anordnung der Verbindungseinrichtung als Matrize und im Fall einer am Verankerungsteil (2) intrakoronalen Anordnung der Verbindungseinrichtung (6) als Patrize ausgebildet ist.

9. Verbinder nach Anspruch 8, dadurch gekennzeichnet, daß bei Ausbildung des Verbindungsorgans (5) als Patrize dieses mit dem Anschluß (8) für das Zahnersatzteil (3) durch ein Stegteil (15) verbunden ist, das sich zwischen dem Verbindungsorgan (5) und dem Anschluß (8) im wesentlichen quer zur Einsteckrichtung der Verbindungseinrichtung (6) erstreckt und zur Einsteckrichtung parallele und/oder sich in Einsteckrichtung einander nähernde seitliche Begrenzungsflächen aufweist.

10. Verbinder nach Anspruch 8, dadurch gekennzeichnet, daß bei Ausbildung des Verbindungsorgans (5) als Matrize dieses auf der dem Anschluß (8) gegenüber liegenden Seite einen sich gegen das Verankerungsteil (2) erstreckenden Ansatz (11) aufweist, der einen einerseits zum Matrizenhohlraum (12) und andererseits zum Verankerungsteil (2) hin offenen Stegformraum (13) bildet, der zur Einsteckrichtung der Verbindungseinrichtung (6) parallele und/oder sich in Einsteckrichtung einander nähernde seitliche Begrenzeungsflächen (14) aufweist.

11. Verbinder nach Anspruch 10, dadurch gekennzeichnet, daß der Stegformraum (13) und der Matrizenhohlraum (12) an dem in Einsteckrichtung rückwärtigen Ende geschlossen sind.

12. Verbinder nach einem der Ansprüche 4 bis 11, dadurch gekennzeichnet, daß der Verbinder (1) einen am Verankerungsteil (2) zur Anlage kommenden Schubverteilungsarm (4) aufweist, und daß die fertig ausgebildeten Paßflächen zum Formschluß mit dem Verankerungsteil (2) auch am Schubverteilungsarm (4) vorgesehen sind.

13. Verbinder nach Anspruch 13, dadurch gekennzeichnet, daß die Verbindungseinrichtung (6) an der Wurzel und/oder am anderen Ende des Schubverteilungsarms (4) angeordnet und in Bezug auf das Verankerungsteil (2) intrakoronal ausgebildet ist.

14. Verbinder nach Anspruch 12 oder 13, dadurch gekennzeichnet, daß wenigstens eine der Verbindungseinrichtungen (6) zwischen dem Verankerungsteil (2) und dem Verbinder (1) in Bezug auf das Verankerungsteil (2) extrakoronal zwischen dem Schubverteilungsarm (4) und dem Anschluß (8) für das Zahnersatzteil (3) ausgebildet ist.

15. Verbinder nach einem der Ansprüche 4 bis 14, dadurch gekennzeichnet, daß wenigstens eine der Verbindungseinrichtungen (6) mit einem Aktivierungsglied, wie Friktionsstift (5.2), Schraube (5.1) oder dergl., ausgestattet ist.

16. Verbinder nach einem der Ansprüche 12 bis 15, dadurch gekennzeichnet, daß die Verbindungseinrichtung (6) zwischen dem Verankerungsteil (2) und dem Verbinder (1) als Geschiebe mit parallelen oder konischen Paßflächen an den Verbindungsorganen (5, 7) und am Schubverteilungsarm (4) und mit oder ohne Verblockungsmittel, wie Steck- oder Schwenkriegel, Rasteinrichtung oder dergl., ausgebildet ist.

17. Verbinder nach einem der Ansprüche 12 bis 16, dadurch gekennzeichnet, daß bei mehreren Verankerungsteilen (2) der Verbinder (1) für jedes Verankerungsteil (2) wenigstens eine Verbindungseinrichtung (6) und einen Schubverteilungsarm (4) aufweist.

18. Verbinder nach Anspruch 17, dadurch gekennzeichnet, daß die Schubverteilungsarme (4) aneinander gereiht sind.

19. Verbinder zwischen einem Verankerungsteil (2), wie Krone oder dergl., am Restgebiß und einem Zahnersatzteil (3), wie Prothesangerüst, Modellguß und dergl., wobei der Verbinder (1) ein Verbindungsorgan (5) aufweist, das zu einer zwischen dem Verbinder und dem Zahnersatzteil (3) vorgesehenen lösbaren Verbindungseinrichtung gehört, die als Geschiebe, Riegel, Schraube oder dergl. ausgebildet ist, wobei das zugeordnete zweite Verbindungsorgan (7) am Zahnersatzteil (3) sitzt, insbesondere zur Durchführung des Verfahrens nach Anspruch 2 oder 3, dadurch gekennzeichnet, daß der Verbinder (1) mit seinem Verbindungsorgan (5) und mit einem Anschluß (8) für das Verankerungsteil (2) vorgefertigt ist und an seinem Verbindungsorgan (5) fertig ausgebildete Paßflächen zum Formschluß mit dem Zahnersatzteil (3) bzw. mit dessen Verbindungsorgan (7) aufweist, wobei der Verbinder (1) aus einer CrKoMo-Legierung oder einer anderen mit dem Werkstoff des Zahnersatzteils (3) keine stoffliche Verbindung eingehenden Legierung besteht oder an seiner Oberfläche entsprechend vorbehandelt und mit einer Trennschicht versehen ist.

20. Verbinder nach Anspruch 19, dadurch gekennzeichnet, daß am Anschluß (8) für das Verankerungsteil (2) Retentionen vorgesehen sind, die eine unlösbare formschlüssige Halterung des Verbinders (1) an dem auf den Anschluß (8) aufzugießenden Verankerungsteil (2) ergeben.

21. Verbinder nach Anspruch 19 oder 20, dadurch gekennzeichnet, daß die Verbindungseinrichtung mit einem Aktivierungsglied, wie Friktionsstift, Schraube oder dergl., ausgestattet ist.

22. Verbinder nach einem der Ansprüche 19 bis 21, dadurch gekennzeichnet, daß die Verbindungseinrichtung als Geschiebe mit parallelen oder konischen paßflächen (1.2) an den Verbindungsorganen (5, 7) und mit oder ohne Verblockungsmittel, wie Steck- oder Schwenkriegel, Rasteinrichtung oder dergl., ausgebildet ist.

23. Verbinder nach einem der Ansprüche 4 bis 22, dadurch gekennzeichnet, daß der Verbinder (1) mit Stiften (19, 20) zum Verankern im Arbeitsmodell oder in der Einbettmasse der Gußform versehen ist.

24. Verbinder nach Ansruch 23, dadurch gekennzeichnet, daß bei Ausbildung der Verbindungseinrichtung als Geschiebe die Stifte (19, 20) parallel zur Steckrichtung des Geschiebes verlaufen.

Fig. 1a

Fig. 1b

Fig. 2a

Fig. 2 b

Fig. 3a

Fig. 3b

Fig. 4 a

Fig. 4 b

Fig. 5a

Fig. 5 b

Fig. 6a

Fig. 6 b

Fig. 7a

Fig. 7 b

Fig. 8a

Fig. 8b

Fig. 9a

Fig. 9b

*Fig. 10*

EP 0 347 574 A2

Brehm

*Fig. 11a*

*Fig. 11b*

Fig. 12 a

Fig. 12 b

Brehm

Fig.13